# EUROPEAN PATENT APPLICATION

(11) **EP 2 958 057 A1**
(43) Date of publication of application: **23.12.2015**
(21) Application number: 15172042.2
(22) Date of filing: 15.06.2015
(51) Int. Cl.: G06Q 10/00

(54) **SYSTEM AND METHODS FOR TRANSMITTING INFORMATION USING INAUDIBLE ACOUSTIC SIGNALS**

(30) Priority: 16.06.2014 US 201414305544
(71) Applicant: WUL4, 14014 Cordoba (ES)
(72) Inventor: Jimenez, Juan Jose Rider, 14014 Cordoba (ES)
(74) Representative: Boynton, Juliette Alice

(57) **Abstract**

A system and associated methods for transmitting information using inaudible acoustic signals are disclosed. In at least one embodiment, a user application resides in memory on an at least one user device; the user application being configured for generating and processing the inaudible acoustic signals. Similarly, a vendor application resides in memory on an at least one vendor device; the vendor application being configured for generating and processing the inaudible acoustic signals as well. Upon a one of the user device and vendor device needing to transmit information to the other, the information is converted to an inaudible acoustic signal. With the user device and vendor device positioned proximal to one another, the inaudible acoustic signal is produced via a speaker of the one of the devices and received via a microphone of the other of the devices. The inaudible acoustic signal is then converted back to the information.

## Description

### BACKGROUND OF THE INVENTION

### RELATED APPLICATIONS:

Not applicable.

### INCORPORATION BY REFERENCE:

Applicant(s) hereby incorporate herein by reference any and all patents and published patent applications cited or referred to in this application.

### FIELD OF THE INVENTION:

Aspects of this invention relate generally to communication systems, and more particularly to systems and methods for transmitting information using inaudible acoustic signals.

### DESCRIPTION OF RELATED ART:

By way of background, conducting payment transactions using mobile devices, such as smartphones, tablets and the like, is becoming increasingly popular as it provides additional layers of abstraction and security with respect to a consumer's credit card information. Certain technologies, such as near field communication ("NFC"), even allow compatible mobile devices to be used at point of sale ("POS") systems for conducting contactless payment transactions in person in lieu of an actual credit card, given that the user's credit card information is stored locally on the mobile device or remotely on a secure server in communication with the mobile device. However, only a small percentage of mobile devices currently on the market actually contain the hardware necessary to support NFC functionality. In light of this, other solutions have been developed such as quick response ("QR") codes or other machine-readable barcodes. However, such solutions require the introduction of additional infrastructure in merchants' and retailers' financial infrastructures - namely, additional hardware and software capable of supporting such solutions.

The need for secure communication systems is not unique to the payment transaction context. Identity verification and access control solutions also require secure communications; especially when said solutions incorporate mobile devices. Similar solutions to those mentioned above in the payment transaction context have been introduced in the access control context; however, the same drawbacks are present.

Marketing and consumer loyalty solutions have also begun to utilize various mobile communication protocols in order to interact with consumers while they are on the go, or even while consumers are physically located in a particular merchant's store. These solutions have also begun to replace the use of physical loyalty or rewards cards. However, because these solutions typically entail the use of NFC or QR codes, they suffer the same drawbacks as mentioned above. Another solution that has been utilized is referred to as audio or acoustic fingerprinting, wherein a condensed digital summary, deterministically generated from an audio signal, is used to identify an audio sample or quickly locate similar items in an audio database. In use, merchants or other parties are able to associate desired information, such as advertising material, with an acoustic fingerprint, such that mobile devices having the appropriate software are able to access the associated information upon "hearing" the acoustic fingerprint in television, motion picture, radio or other audio-based media content. However, this solution can be limited in that the acoustic fingerprints are audible to human ears and so must have a limited range so as to avoid the use of potentially unpleasant sounds.

Therefore, there remains a need for a solution in each of these contexts that can be utilized by virtually all computing devices without the need for any additional or special hardware. Aspects of the present invention fulfill these needs and provide further related advantages as described in the following summary.

### SUMMARY OF THE INVENTION

Aspects of the present invention teach certain benefits in construction and use which give rise to the exemplary advantages described below.

The present invention solves the problems described above by providing a system and associated methods for transmitting information using inaudible acoustic signals. At the outset, it should be noted that the term "inaudible" is meant to include any acoustic signals that fall outside of the audible frequency range that can be heard by most people. In at least one embodiment, a user application resides in memory on an at least one user device under the control of a user; the user application being configured for generating and processing the inaudible acoustic signals. Similarly, a vendor application resides in memory on an at least one vendor device under the control of a vendor; the vendor application being configured for generating and processing the inaudible acoustic signals as well. Upon a one of the user device and vendor device needing to transmit information to the other, the information is converted to an inaudible acoustic signal. With the user device and vendor device positioned proximal to one another, the inaudible acoustic signal is produced via a speaker of the one of the devices and received via a microphone of the other of the devices. The inaudible acoustic signal is then converted back to the information.

Other features and advantages of aspects of the present invention will become apparent from the following more detailed description, taken in conjunction with the accompanying drawings, which illustrate, by way of example, the principles of aspects of the invention.

### BRIEF DESCRIPTION OF THE DRAWINGS

The accompanying drawings illustrate aspects of the present invention. In such drawings:
Figure 1 is a simplified schematic view of an exemplary system for transmitting information using inaudible acoustic signals, in accordance with at least one embodiment;
Figure 2 is a flow diagram of an exemplary method for enrolling a user or vendor in the exemplary system for transmitting information using inaudible acoustic signals, in accordance with at least one embodiment;
Figure 3 is a simplified schematic view of a further exemplary system for transmitting information using inaudible acoustic signals, in accordance with at least one embodiment; and
Figures 4-6 are flow diagrams of exemplary methods for transmitting information using inaudible acoustic signals, in accordance with at least one embodiment.

The above described drawing figures illustrate aspects of the invention in at least one of its exemplary embodiments, which are further defined in detail in the following description. Features, elements, and aspects of the invention that are referenced by the same numerals in different figures represent the same, equivalent, or similar features, elements, or aspects, in accordance with one or more embodiments.

### DETAILED DESCRIPTION OF THE INVENTION

The above described drawing figures illustrate aspects of the invention in at least one of its exemplary embodiments, which are further defined in detail in the following description.

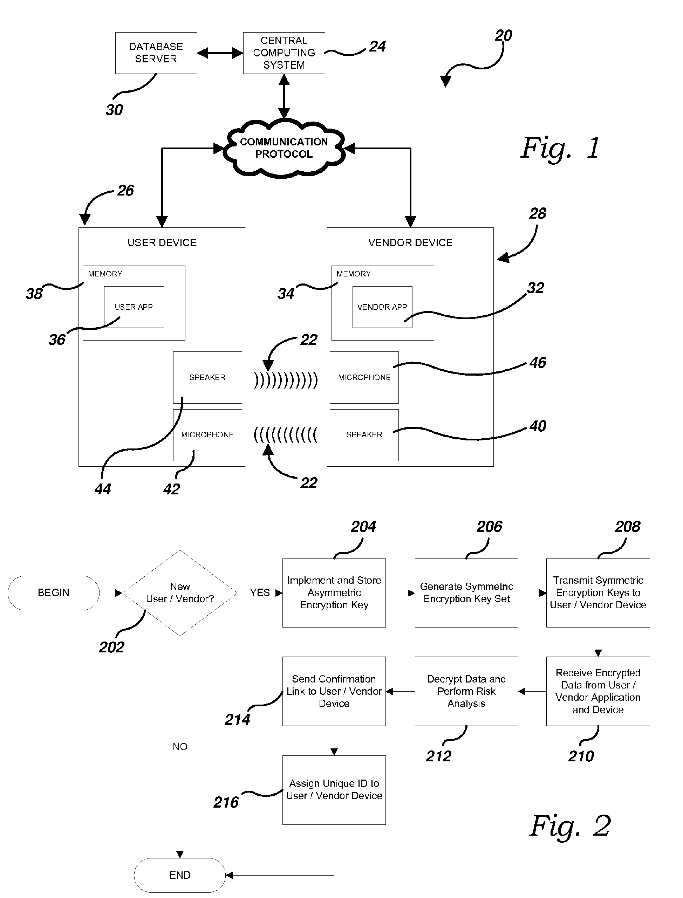

Turning now to Fig. 1, there is shown a simplified schematic view of an exemplary system **20** for transmitting information using inaudible acoustic signals **22**. At the outset, again, it should be noted that the term "inaudible" is meant to include any acoustic signals that fall outside of the audible frequency range that can be heard by most people. As such, the system **20** and associated methods should not be read as being limited to any one particular frequency range, even though certain exemplary frequency ranges, such as ultrasonic, may be mentioned herein for illustrative purposes. With that said, in at least one embodiment, the system **20** utilizes inaudible acoustic signals **22** in the ultrasonic frequency range. Ultrasound is typically considered to fall within the 15-28 kHz frequency range; though ultrasound has no fixed upper limit. In another embodiment, the inaudible acoustic signals **22** can go down to 10 kHz while still retaining the benefits of ultrasonic frequency signals. Given that the frequency used to transmit the inaudible acoustic signals **22** dictates the distance said signals **22** may travel, the exact frequency or frequency range may vary in different embodiments of the system **20**, depending in part on the context in which the system **20** is to be utilized and, thus, the transmission distance needed.

With continued reference to Fig. 1, the system **20** provides, in at least one embodiment, a central computing system **24** configured for receiving and processing data related to an at least one user, an at least one vendor, and an at least one inaudible acoustic signal **22**, an at least one user device **26** in selective communication with the computing system **24**, and an at least one vendor device **28** also in selective communication with the computing system **24**. In at least one embodiment, as discussed further below, the at least one user device **26** is also in selective communication with the at least one vendor device **28**. Additionally, in at least one embodiment, a database server **30** is in communication with the computing system **24** and configured for selectively storing said data related to the at least one user, user device **26**, vendor, vendor device **28**, and inaudible acoustic signal **22**. In at least one embodiment, the computing system **24** and database server **30** are one and the same. In at least one embodiment, the computing system **24** and database server **30** are omitted, such that the system **20** and associated methods described herein are implemented solely through the at least one user device **26** and at least one vendor device **28**.

At the outset, it should be noted that, in addition to inaudible acoustic signals **22**, communication between each of the computing system **24**, at least one user device **26**, at least one vendor device **28**, and database server **30** may be achieved using any wired- or wireless-based communication protocol (or combination of protocols) now known or later developed. As such, the present invention should not be read as being limited to any one particular type of communication protocol, even though certain exemplary protocols may be mentioned herein for illustrative purposes. It should also be noted that the terms "user device" and "vendor device" are intended to include any type of computing or electronic device now known or later developed, such as desktop computers, mobile phones, smartphones, laptop computers, tablet computers, personal data assistants, gaming devices, POS systems, vending machines, unattended terminals, access control devices, point of interaction ("POI") systems, etc. Furthermore, in at least one embodiment, the term "vendor device" is intended to include any electronic devices in a user's possession or otherwise in the user's proximity that a vendor may selectively utilize to transmit inaudible acoustic signals **22** to the at least one user device **26**, including but not limited to televisions, motion picture theater systems, radios, personal music players, public address systems, computing devices, etc. It should also be noted that, in at least one embodiment, the term "vendor" is intended to generally include any type of entity in the business of providing goods, services, or any other benefit now known or later conceived, to the at least one user, including but not limited to manufacturers, merchants, retailers, service providers, lenders, facility access managers, website owners, etc.

With continued reference to Fig. 1, in the exemplary embodiment, the computing system **24** contains the hardware and software necessary to carry out the exemplary methods for transmitting information using inaudible acoustic signals **22** as described herein. Furthermore, in at least one embodiment, the computing system **24** comprises a plurality of computing devices selectively working in concert with one another to carry out the exemplary methods for transmitting information using inaudible acoustic signals **22** as described herein. In at least one embodiment, each vendor device **28** provides a vendor application **32** residing in memory **34** on the vendor device **28**, while each user device **26** provides a user application **36** residing in memory **34** on the user device **26**; each of the vendor application **32** and user application **36** being configured for generating and/or processing the inaudible acoustic signals **22**, among other functions described herein. It should be noted that the term "memory" is intended to include any type of electronic storage medium (or combination of storage mediums) now known or later developed, such as local hard drives, RAM, flash memory, external storage devices, network or cloud storage devices, etc. Furthermore, the various components of each user device **26** and vendor device **28** may reside in memory on a single computing or electronic device, or may separately reside on two or more computing or electronic devices in communication with one another. Additionally, each vendor device **28** provides an at least one vendor speaker **40** capable of producing the inaudible acoustic signals **22**, while each user device **26** provides an at least one user microphone **42** capable of receiving the inaudible acoustic signals **22**. In at least one embodiment, as discussed below, each user device **26** further provides an at least one user speaker **44** capable of producing the inaudible acoustic signals **22**, while each vendor device **28** provides an at least one vendor microphone **46** capable of receiving the inaudible acoustic signals **22**, thereby allowing for two-way communication between each of the user devices **26** and vendor devices **28**. In at least one embodiment, the user device **26** is in the possession of a user who is desirous of interacting with the at least one vendor device **28** as described further below. Similarly, in at least one embodiment, the at least one vendor device **28** is in the possession or control of a participating vendor from whom the user is desirous of acquiring some good, service or other benefit. It should be noted that, in certain embodiments the vendor device **28** may omit the vendor application **32** and vendor microphone **46**, such that the vendor device **28** simply transmits the inaudible acoustic signals **22**, as generated by the computing system **24**, via the vendor speaker **40** - such as where the vendor device **28** is a television or radio, for example. As such, depending on the context in which the system **20** is used, in various embodiments, each of the at least one user device **26** and at least one vendor device **28** may include or omit any combination of the components described above.

As discussed in detail below, the system **20** may be utilized in a variety of contexts. In each such context, the vendor device **28** transmits the inaudible acoustic signal **22** either as an embedded or overlaid signal with other audible media content being transmitted via the vendor speaker **40**, or as a simultaneous broadcast along with other audible media content being transmitted via the vendor speaker **40**, or absent any other audible media content. It should be noted that the following applications of the system **20** are merely exemplary and are being provided herein for illustrative purposes. As such, the system **20** and associated methods described herein should not be read as being so limited, but instead can be utilized in any context, now known or later conceived, where there is a need for transmitting information using inaudible acoustic signals **22**.

Regardless of the context in which the system **20** is implemented, in at least one embodiment, as illustrated in the flow diagram of Fig. 2, upon the user desiring to utilize the system **20** in connection with a given vendor device **28**, it is first determined whether the user has enrolled in the system **20 (202)**. In the exemplary embodiment, if the user is new and must enroll, the computing system **24** first implements an asymmetric encryption key **(204)** to be securely stored in either the computing system **24** or database server **30**. In at least one embodiment, the public certificate for the asymmetric key is stored in memory **34** and **38** on each of the user device **26** and vendor device **28**. Next, the computing system **24** generates a unique set of symmetric encryption keys **(206)** to be stored and used by the user application **36** when sending and receiving the inaudible acoustic signals **22** and communicating with the computing system **24**. In the exemplary embodiment, the set of symmetric keys includes: a transport key to be used to encrypt and decrypt information that is transmitted between the computing system **24** and each of the user application **36** and vendor application **32**; a signature key to be used to create an integrity cryptogram in order to avoid any data manipulation in between any communications and for end point authentication; a storage key to be used to encrypt and decrypt any sensitive data that might be stored in memory **38** on the user device **26**; and a master key to be used to encrypt each of the transport key, signature key and storage key. In at least one embodiment, to maintain the integrity of the symmetric keys, the computing system **24** encrypts them using the master key before sending them to the user device **26**. Upon receiving and storing the set of symmetric keys **(208)**, the user application **36** encrypts and transmits to the computing system **24** user-specific data related to the user device **26** and user application **36 (210)**. In one such embodiment, the user-specific data may include user information such as the user's name, the user's email address, a one-way hash of the user's password, the make and model of the user device **26**, and the associated signature key. The computing system **24** decrypts the user-specific data, performs risk analysis on the data **(212)**, and sends a confirmation link to the user device **26 (214)**. The computing system **24** subsequently assigns a unique user ID to the user application **36 (216)**. It should be noted that, in at least one embodiment, the same steps are carried out when enrolling a new vendor device **28** with the system **20**. Once the user application **36** has been installed and the user enrolled in the system **20**, the user application **36** can be used to add and manage payment methods (i.e., credit cards, bank accounts, etc.) in order to use the user application **36** to make payments, as discussed further below. Additionally, the user could use the user application **36** to simply receive marketing information, as also discussed further below. Relatedly, in the context of the vendor device **28**, once the vendor application **32** has been installed and the vendor enrolled in the system **20**, the vendor application **32** can be used to add and manage the inaudible acoustic signals **22** to be transmitted via the vendor speaker **40**.

### MOBILE MARKETING APPLICATIONS

As mentioned above, the system **20** may be utilized in a variety of contexts. One such context is mobile marketing. In a bit more detail and by way of example, in at least one embodiment, where the vendor device **28** is a television or radio located proximal to the at least one user device **26**, the vendor device **28** may send via the inaudible acoustic signals **22** product information, offers or advertisements to be displayed on the user device **26** while the user is viewing or listening to a particular product commercial on the vendor device **28**. In a further embodiment, the inaudible acoustic signals **22** may contain instructions for allowing the user device **26** to start a payment process to securely purchase the product featured in the media content being provided by the vendor device **28**. In a still further embodiment, the inaudible acoustic signals **22** may contain details related to a customized product based on the user's needs, preferences, or demographic. In at least one embodiment, this is achieved by embedding, overlaying or simultaneously broadcasting the inaudible acoustic signals **22** in or with the media content being provided by the vendor device **28**. Thus, because the inaudible acoustic signals **22** cannot be heard by most people, the data is capable of being transmitted from the vendor device **28** to the user device **26** without the user hearing anything other than the media content being emitted by the vendor speaker **40**. And because the vendor speakers **40** may be any pre-existing speakers built into the television or radio, no additional hardware is required for the system **20** to function properly.

In another example, in at least one embodiment, where the vendor device **40** is a public address or similar speaker system positioned within a retail establishment where the user device **26** - and, thus, the user - is physically located, the vendor device **28** may send via the inaudible acoustic signals **22** product information, current sales, additional discounts to be displayed on the user device **26** while the user is in or near the retail establishment. This ensures that the user is only receiving the marketing information while the user is at or near the associated retail establishment while the information is still relevant and while the user has the greatest propensity to actually make a purchase (since the user is at or near the retail establishment). In at least one further embodiment, the inaudible acoustic signals **22** may contain instructions for allowing the user device **26** to start a payment process to securely purchase the product featured in the media content being provided by the vendor device **28**. Additionally, similar to the context of television and radio discussed above, the inaudible acoustic signals **22** may be transmitted concurrently with audible media content (such as background music) or may be transmitted without any audible media content. Furthermore, because the acoustic signals **22** are inaudible, a given retail establishment is able to simultaneously transmit a variety of different inaudible acoustic signals **22** (each relating to a different product or different offer, for example) via multiple vendor speakers **40** positioned throughout the retail establishment without creating a cacophony of noise that would otherwise annoy or distract the user. And, again, because the vendor speakers **40** may be any pre-existing speakers capable of producing the inaudible acoustic signals **22**, no additional hardware is required for the system **20** to function properly.

### MOBILE PAYMENT APPLICATIONS

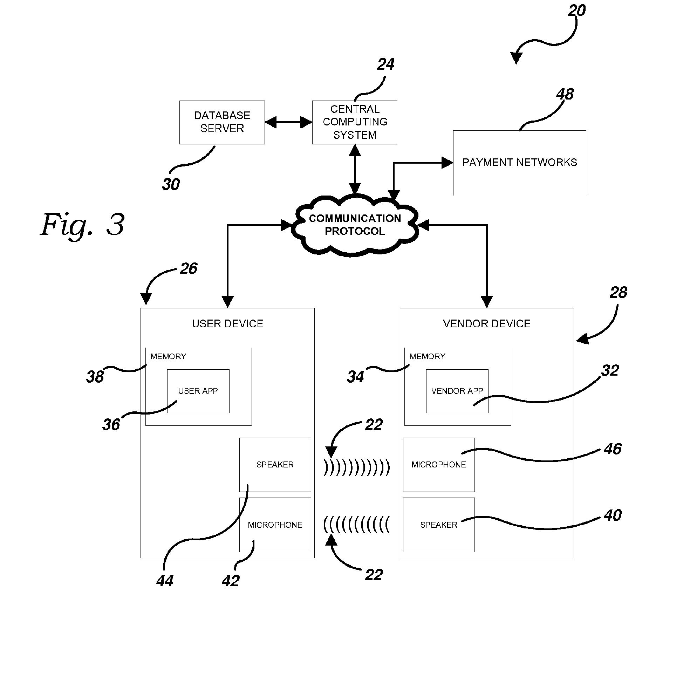

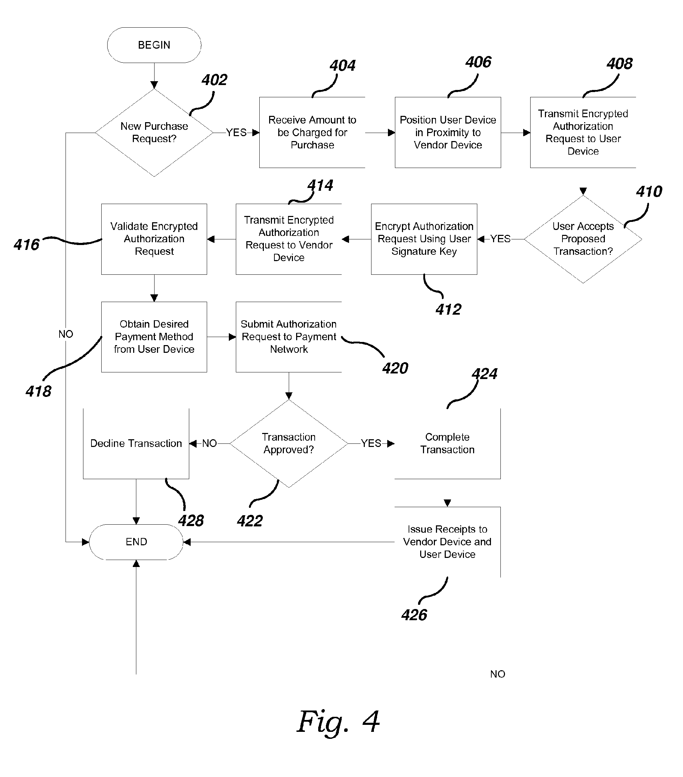

Another context in which the system **20** may be utilized is mobile payments. In a bit more detail and by way of example, in at least one embodiment, as illustrated in the simplified schematic view of Fig. 3 and the flow diagram of Fig. 4, the vendor device **28** is a POS system positioned within a retail establishment where the user device **26** - and, thus, the user - is physically located. Upon a user electing to purchase a desired item (i.e., product, service, etc.) (**402**), the vendor first inputs the amount to be charged into the vendor application **32** of the vendor device **28** (**404**). The user device **26** is placed in sufficient proximity to the vendor device **28** (**406**) at which point the vendor device **28** transmits an encrypted authorization request, using the signature key associated with the vendor device **28**, to the user device **26** via an inaudible acoustic signal **22** (**408**). In at least one such embodiment, the authorization request contains a unique vendor ID along with information related to the proposed transaction, including but not limited to the date and time of the proposed transaction, the location of the proposed transaction, and the proposed transaction amount. Upon the user device **26** receiving the authorization request and the user accepting the proposed transaction (**410**), the user application **36** encrypts the authorization request using the signature key (**412**) then transmits the encrypted data back to the vendor device **28** via an inaudible acoustic signal **22** (**414**). Upon the vendor device **28** receiving the encrypted data, the vendor application **32** forwards the encrypted data to the computing system **24** for validation (**416**). Given that each user device **26** and each vendor device **28** has a unique set of symmetric encryption keys, including the signature key, the computing system **24** is able to determine whether the purported user application **36** actually generated the encrypted data - thereby verifying that the associated user actually authorized the payment transaction. In at least one embodiment, depending on transaction parameters (i.e., transaction amount, risk levels, etc.), the computing system **24** may require additional user authentication, such as by sending a PUSH message to the user device **26**, and waiting for user confirmation. Upon validation, the computing system **24** queries the user application **36** to obtain the desired payment method to be used for the transaction (**418**), then submits an authorization request to an appropriate payment network **48** (i.e., credit card company, bank, etc.) (**420**). Upon the payment network **48** approving the transaction (**422**), the computing system **24** completes the transaction (**424**) and issues electronic receipts to each of the vendor device **28** and user device **26** (**426**). If the payment network **48** does not approve the transaction, the computing system **24** declines the transaction (**428**). It should be noted that while the above example discusses the context of the vendor device **28** being a POS system positioned within a retail establishment, in further embodiments, this same method can be employed in any other context so long as the vendor device **28** provides a vendor microphone **46** capable of allowing the vendor application **32** to receive and process incoming inaudible acoustic signals **22** from the user device **26**. As such, in at least one embodiment, the system **20** is capable of facilitating both in-store and remote payment transactions. Furthermore, because the encrypted authorization request contains one or more of the date and time of the proposed transaction and the location of the proposed transaction in at least one embodiment, the above described method prevents anyone who might intercept the encrypted data transmission from trying to fraudulently re-use or repeat the payment transaction. Additionally, because the critical data associated with the user (i.e., credit card information, etc.) is never specifically known to the vendors in at least one embodiment - the data instead being encrypted on one or both of the user device **26** and computing system **24** - vendors are in compliance with Payment Card Industry ("PCI") standards.

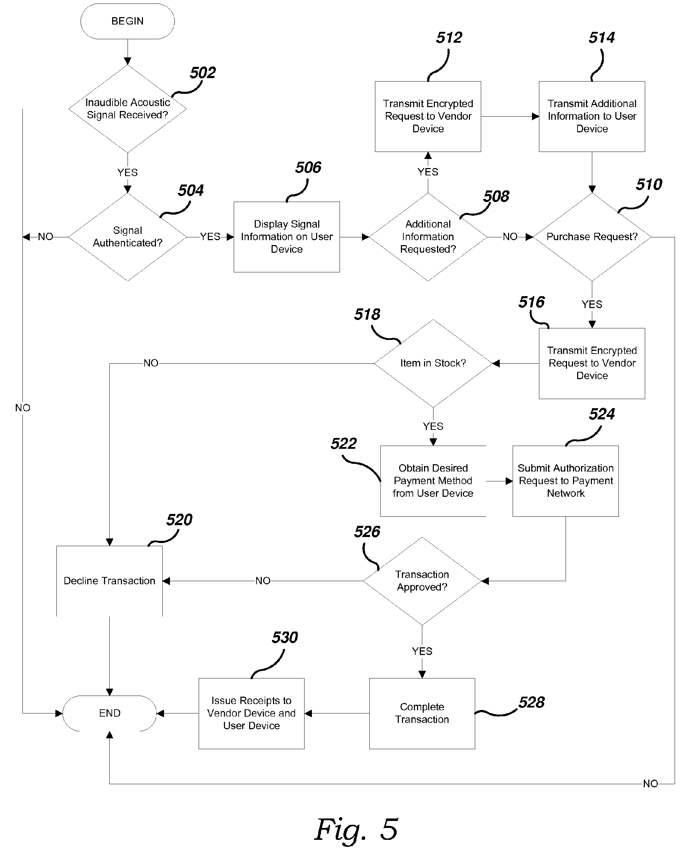

In another example, in at least one embodiment, where the user device **26** receives an inaudible acoustic signal **22** from the vendor device **28** containing a product or service offer or related marketing information, the user application **36** may provide the ability for the user to purchase said product or service (i.e., without the vendor manually initiating the proposed transaction as in the above example). In such a scenario, in at least one embodiment, as illustrated in the flow diagram of Fig. 5, upon the user device **26** receiving the inaudible acoustic signal **22** (**502**), the user application **36** first authenticates the acoustic signal **22** (**504**) to verify that it originated from the purported vendor device **28**. In the exemplary embodiment, this is accomplished based on verifying the associated signature key. Once authenticated, the item information is displayed on the user device **26** (**506**) and the user is given the option of requesting additional item information (**508**) or submitting a purchase request for the item (**510**). Upon the user requesting additional item information, the user device **26** transmits the encrypted request to the vendor device **28** via an inaudible acoustic signal **22** (**512**). Alternatively, in embodiments where the vendor device **28** has no vendor microphone **46**, the user device **26** transmits the encrypted request to the computing system **24** which, in turn, transmits the encrypted request to the vendor device **28**. Upon receiving the request for additional item information, the vendor device **28** transmits said information to the user device **26** via a further inaudible acoustic signal **22** (**514**). Upon the user submitting a purchase request for the item, the user device **26** transmits the encrypted request to the vendor device **28** via an inaudible acoustic signal **22** (**516**) - or, again, to the computing system **24** if the vendor device **28** has no vendor microphone **46**. In at least one embodiment, the purchase request is encrypted by the signature key associated with the user device **26** and contains information related to the proposed transaction, including but not limited to the date and time of the proposed transaction, the item or items to be purchased, the proposed transaction amount, the user's name and contact information, and a unique transaction token. Upon receiving the purchase request, if the item is determined to be out of stock (**518**), the vendor device **28** may reject the purchase request and notify the user device **26** accordingly via an inaudible acoustic signal **22** (**520**). Otherwise, if the item is determined to be in stock, the computing system **24** queries the user application **36** to obtain the desired payment method to be used for the transaction (**522**), then submits an authorization request to the appropriate payment network **48** (**524**). Upon the payment network **48** approving the transaction (**526**), the computing system **24** completes the transaction (**528**) and issues electronic receipts to each of the vendor device **28** and user device **26** (**530**).

### ACCESS CONTROL AND IDENTIFICATION APPLICATIONS

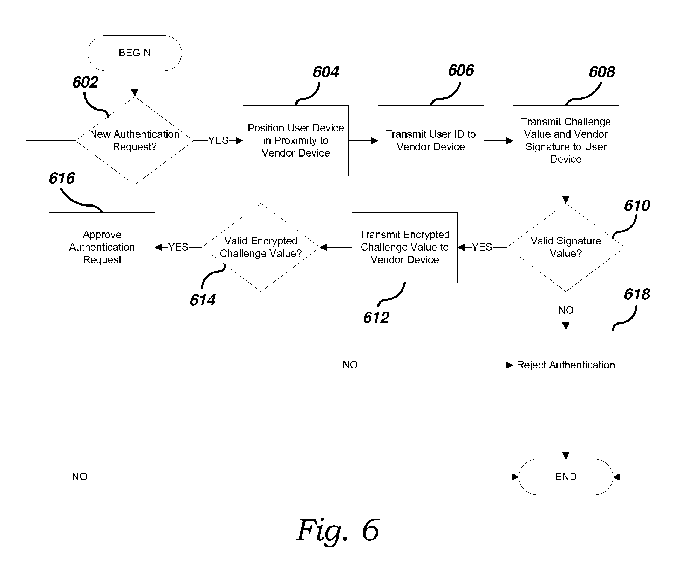

Another context in which the system **20** may be utilized is access control and identity verification. In a bit more detail and by way of example, in at least one embodiment, as illustrated in the flow diagram of Fig. 6, the vendor device **28** is an access control device. Upon a user desiring to be authenticated or otherwise have their identity verified (**602**), the user device **26** is placed in sufficient proximity to the vendor device **28** (**604**) at which point the user device **26** transmits to the vendor device **28** via an inaudible acoustic signal **22** a unique user ID associated with the user (**606**). Upon receiving the user ID, the vendor application **32** responds by transmitting to the user device **26** an inaudible acoustic signal **22** containing at least one of a unique vendor ID, a randomly generated challenge value to be signed by the user application **36**, and a signature value generated by the signature key associated with the vendor device **28** (**608**). The user application **36** subsequently validates the signature value via the computing system **24** (**610**) and, if valid, the user application **36** responds by transmitting to the vendor device **28** an inaudible acoustic signal **22** containing at least one of the user ID and the challenge value as encrypted by the signature key associated with the user device **26** (**612**). The vendor application **32** subsequently validates the encrypted challenge value via the computing system **24** (**614**) and, if valid, the vendor application **32** approves the user's authentication request (**616**). If not valid, the vendor application **32** rejects the user's authentication request (**618**). This method may be utilized in virtually any context where access control and/or identity verification is needed, such as turnstiles, toll highways, vending machines, unattended machines, office doors, hotel rooms, etc. In at least one embodiment, rather than the user having to manually initiate the authentication process via the user device **26**, the vendor device **28** instead transmits a perpetual, constant or periodic authentication invitation as an inaudible acoustic signal **22** containing at least one of the vendor ID, the randomly generated challenge value to be signed by the user application **36**, and the signature value generated by the signature key associated with the vendor device **28** (**608**), to be received by any user devices **26** within proximity. Once in proximity, the user device **26** receives the inaudible acoustic signal **22** and the remainder of the above described method is carried out beginning at step **610**.

Regarding the exemplary embodiments of the present invention as shown and described herein, it will be appreciated that a system and associated methods for transmitting information using inaudible acoustic signals are disclosed. Because the principles of the invention may be practiced in a number of configurations beyond those shown and described, it is to be understood that the invention is not in any way limited by the exemplary embodiments, but is generally directed to a system and associated methods for transmitting information using inaudible acoustic signals and is able to take numerous forms to do so without departing from the spirit and scope of the invention. Furthermore, the various features of each of the above-described embodiments may be combined in any logical manner and are intended to be included within the scope of the present invention.

Groupings of alternative embodiments, elements, or steps of the present invention are not to be construed as limitations. Each group member may be referred to and claimed individually or in any combination with other group members disclosed herein. It is anticipated that one or more members of a group may be included in, or deleted from, a group for reasons of convenience and/or patentability. When any such inclusion or deletion occurs, the specification is deemed to contain the group as modified thus fulfilling the written description of all Markush groups used in the appended claims.

Unless otherwise indicated, all numbers expressing a characteristic, item, quantity, parameter, property, term, and so forth used in the present specification and claims are to be understood as being modified in all instances by the term "about." As used herein, the term "about" means that the characteristic, item, quantity, parameter, property, or term so qualified encompasses a range of plus or minus ten percent above and below the value of the stated characteristic, item, quantity, parameter, property, or term. Accordingly, unless indicated to the contrary, the numerical parameters set forth in the specification and attached claims are approximations that may vary. At the very least, and not as an attempt to limit the application of the doctrine of equivalents to the scope of the claims, each numerical indication should at least be construed in light of the number of reported significant digits and by applying ordinary rounding techniques. Notwithstanding that the numerical ranges and values setting forth the broad scope of the invention are approximations, the numerical ranges and values set forth in the specific examples are reported as precisely as possible. Any numerical range or value, however, inherently contains certain errors necessarily resulting from the standard deviation found in their respective testing measurements. Recitation of numerical ranges of values herein is merely intended to serve as a shorthand method of referring individually to each separate numerical value falling within the range. Unless otherwise indicated herein, each individual value of a numerical range is incorporated into the present specification as if it were individually recited herein.

The terms "a," "an," "the" and similar referents used in the context of describing the present invention (especially in the context of the following claims) are to be construed to cover both the singular and the plural, unless otherwise indicated herein or clearly contradicted by context. All methods described herein can be performed in any suitable order unless otherwise indicated herein or otherwise clearly contradicted by context. The use of any and all examples, or exemplary language (e.g., "such as") provided herein is intended merely to better illuminate the present invention and does not pose a limitation on the scope of the invention otherwise claimed. No language in the present specification should be construed as indicating any non-claimed element essential to the practice of the invention.

Specific embodiments disclosed herein may be further limited in the claims using consisting of or consisting essentially of language. When used in the claims, whether as filed or added per amendment, the transition term "consisting of" excludes any element, step, or ingredient not specified in the claims. The transition term "consisting essentially of" limits the scope of a claim to the specified materials or steps and those that do not materially affect the basic and novel characteristic(s). Embodiments of the present invention so claimed are inherently or expressly described and enabled herein.

It should be understood that the logic code, programs, modules, processes, methods, and the order in which the respective elements of each method are performed are purely exemplary. Depending on the implementation, they may be performed in any order or in parallel, unless indicated otherwise in the present disclosure. Further, the logic code is not related, or limited to any particular programming language, and may comprise one or more modules that execute on one or more processors in a distributed, non-distributed, or multiprocessing environment.

The methods as described above may be used in the fabrication of integrated circuit chips. The resulting integrated circuit chips can be distributed by the fabricator in raw wafer form (that is, as a single wafer that has multiple unpackaged chips), as a bare die, or in a packaged form. In the latter case, the chip is mounted in a single chip package (such as a plastic carrier, with leads that are affixed to a motherboard or other higher level carrier) or in a multi-chip package (such as a ceramic carrier that has either or both surface interconnections or buried interconnections). In any case, the chip is then integrated with other chips, discrete circuit elements, and/or other signal processing devices as part of either (a) an intermediate product, such as a motherboard, or (b) an end product. The end product can be any product that includes integrated circuit chips, ranging from toys and other low-end applications to advanced computer products having a display, a keyboard or other input device, and a central processor.

Aspects of the present specification may also be described as follows:
1. A method for transmitting information between an at least one user device, under the control of a user, and an at least one vendor device, under the control of a vendor, using inaudible acoustic signals, the method comprising the steps of: implementing a user application residing in memory on the at least one user device, said user application configured for generating and processing the inaudible acoustic signals; implementing a vendor application residing in memory on the at least one vendor device, said vendor application configured for generating and processing the inaudible acoustic signals; and upon a one of the user device and vendor device needing to transmit information to the other of the user device and vendor device: converting the information, via the one of the user device and vendor device, to an inaudible acoustic signal; positioning the user device and vendor device proximal to one another; producing the inaudible acoustic signal via a speaker of the one of the user device and vendor device; receiving the inaudible acoustic signal via a microphone of the other of the user device and vendor device; and converting the inaudible acoustic signal, via the other one of the user device and vendor device, back to the information.
2. The method according to embodiment 1, further comprising the step of implementing a central computing system in selective communication with each of the at least one user device and at least one vendor device and configured for receiving and processing data related to the at least one user device, the at least one vendor device, and the inaudible acoustic signals.
3. The method according to embodiment 1-2, further comprising the step of implementing a database server in communication with the computing system and configured for selectively storing said data related to the at least one user, user device, vendor, vendor device, and inaudible acoustic signal.
4. The method according to embodiment 1-3, further comprising the step of implementing an asymmetric encryption key to be securely stored in the computing system, the public certificate for which being stored in memory on each of the user device and vendor device.
5. The method according to embodiment 1-4, further comprising the step of generating a unique set of symmetric encryption keys for each of the at least one user device and vendor device, said symmetric encryption keys to be securely stored in memory on the associated at least one user device and vendor device.
6. The method according to embodiment 1-5, wherein the step of generating a unique set of symmetric encryption keys for each of the at least one user device and vendor device further comprises the step of generating at least one of: a transport key to be used to encrypt and decrypt information that is transmitted between the computing system and each of the user application and vendor application; a signature key to be used to create an integrity cryptogram in order to avoid any data manipulation in between any communications and for end point authentication; a storage key to be used to encrypt and decrypt any sensitive data that might be stored in memory on the user device; and a master key to be used to encrypt each of the transport key, signature key and storage key.
7. The method according to embodiment 1-6, further comprising the steps of, upon enrolling a new user device with the computing system: encrypting and transmitting to the computing system user-specific data related to the user device and user application, said data including at least one of a name of the user, an email address of the user, a one-way hash of a password of the user, a make and model of the user device, and the associated signature key; receiving and decrypting the user-specific data via the computing system; performing risk analysis on the user-specific data; sending a confirmation link to the user device; and assigning a unique user ID to the user device.
8. The method according to embodiment 1-7, further comprising the step of allowing the user application to add and manage an at least one payment method for conducting payment transactions through the computing system.
9. The method according to embodiment 1-8, further comprising the steps of, upon enrolling a new vendor device with the computing system: encrypting and transmitting to the computing system vendor-specific data related to the vendor device and vendor application, said data including at least one of a name of the vendor, an email address of the vendor, a one-way hash of a password of the vendor, a make and model of the vendor device, and the associated signature key; receiving and decrypting the vendor-specific data via the computing system; performing risk analysis on the vendor-specific data; sending a confirmation link to the vendor device; and assigning a unique vendor ID to the vendor device.
10. The method according to embodiment 1-9, further comprising the step of allowing the vendor application to add and manage the inaudible acoustic signals to be transmitted via the vendor device.
11. The method according to embodiment 1-10, wherein the step of producing the inaudible acoustic signal via a speaker of the one of the user device and vendor device further comprises the step of producing the inaudible acoustic signal concurrently with audible media content.
12. The method according to embodiment 1-11, further comprising the step of, upon the user electing to purchase a desired product or service: inputting into the vendor application of the vendor device a proposed transaction amount to be charged for the desired product or service; generating an authorization request containing a unique vendor ID associated with the vendor device along with information related to the proposed transaction, including the proposed transaction amount; encrypting the authorization request using a unique signature key associated with the vendor device; transmitting the encrypted authorization request to the user device; accepting the proposed transaction via the user device; encrypting the authorization request using a unique signature key associated with the user device; transmitting the encrypted authorization request back to the vendor device; validating the encrypted authorization request to ensure it originated from the user device; querying the user application to obtain the desired payment method to be used for the proposed transaction; submitting a payment authorization request to an appropriate payment network associated with the desired payment method; and upon the payment network approving the payment authorization request, completing the transaction.
13. The method according to embodiment 1-12, further comprising the step of issuing electronic receipts to each of the vendor device and user device upon completion of the transaction.
14. The method according to embodiment 1-13, further comprising the step of transmitting information related to a given product or service to the at least one user device, the step comprising the further steps of: upon the user device receiving the inaudible acoustic signal containing the information related to the product or service, authenticating the inaudible acoustic signal to verify that it originated from the vendor device; upon authenticating the inaudible acoustic signal, displaying the information on the user device; and providing the options, via the user device, of requesting additional information on the product or service, or submitting a purchase request for the product or service.
15. The method according to embodiment 1-14, further comprising the steps of, upon the user requesting additional information on the product or service: transmitting an encrypted information request to the vendor device; and transmitting said additional information to the user device.
16. The method according to embodiment 1-15, further comprising the steps of, upon the user desiring to submit a purchase request for the product or service: transmitting an encrypted purchase request to the vendor device, said purchase request containing at least one of a date and time of the proposed transaction, product or service to be purchased, a proposed transaction amount, a name of the user, an email address of the user, a phone number of the user, a mailing address of the user, and a unique transaction token; upon determining that the product or service is unavailable, rejecting the purchase request and transmitting an appropriate notice to the user device; and upon determining that the product or service is available, querying the user application to obtain the desired payment method to be used for the proposed transaction; submitting a payment authorization request to an appropriate payment network associated with the desired payment method; and upon the payment network approving the payment authorization request, completing the transaction.
17. The method according to embodiment 1-16, further comprising the step of, upon the user electing to be authenticated or otherwise have their identity verified: transmitting an authentication request to the vendor device, said authentication request containing a unique user ID associated with the user device; transmitting to the user device at least one of a unique vendor ID associated with the vendor device, a randomly generated challenge value to be signed by the user application, and a signature value generated by a unique signature key associated with the vendor device; upon validating the signature value, transmitting to the vendor device at least one of the user ID and the challenge value as encrypted by a unique signature key associated with the user device; and upon validating the encrypted challenge value, approving the authentication request.
18. The method according to embodiment 1-17, further comprising the step of transmitting a perpetual authentication invitation containing at least one of the vendor ID, the randomly generated challenge value to be signed by the user application, and the signature value generated by the signature key associated with the vendor device, said authentication invitation to be received by any user device located proximal to the vendor device.
19. A method for transmitting information between an at least one user device, under the control of a user, and an at least one vendor device, under the control of a vendor, using inaudible acoustic signals, the method comprising the steps of: implementing a user application residing in memory on the at least one user device, said user application configured for generating and processing the inaudible acoustic signals; implementing a vendor application residing in memory on the at least one vendor device, said vendor application configured for generating and processing the inaudible acoustic signals; and upon a one of the user device and vendor device needing to transmit information to the other of the user device and vendor device: converting the information, via the one of the user device and vendor device, to an inaudible acoustic signal; positioning the user device and vendor device proximal to one another; producing the inaudible acoustic signal, concurrently with audible media content, via a speaker of the one of the user device and vendor device; receiving the inaudible acoustic signal via a microphone of the other of the user device and vendor device; and converting the inaudible acoustic signal, via the other one of the user device and vendor device, back to the information.
20. A method for transmitting information between an at least one user device, under the control of a user, and an at least one vendor device, under the control of a vendor, using inaudible acoustic signals, the method comprising the steps of: implementing a central computing system in selective communication with each of the at least one user device and at least one vendor device and configured for receiving and processing data related to the at least one user device, the at least one vendor device, and the inaudible acoustic signals; implementing a user application residing in memory on the at least one user device, said user application configured for generating and processing the inaudible acoustic signals; implementing a vendor application residing in memory on the at least one vendor device, said vendor application configured for generating and processing the inaudible acoustic signals; implementing an asymmetric encryption key to be securely stored in the computing system, the public certificate for which being stored in memory on each of the user device and vendor device; generating a unique set of symmetric encryption keys for each of the at least one user device and vendor device, said symmetric encryption keys to be securely stored in memory on the associated at least one user device and vendor device; and upon a one of the user device and vendor device needing to transmit information to the other of the user device and vendor device: encrypting the information using a one of the symmetric encryption keys associated with the vendor device; converting the encrypted information, via the one of the user device and vendor device, to an inaudible acoustic signal; positioning the user device and vendor device proximal to one another; producing the inaudible acoustic signal via a speaker of the one of the user device and vendor device; receiving the inaudible acoustic signal via a microphone of the other of the user device and vendor device; converting the inaudible acoustic signal, via the other one of the user device and vendor device, back to the encrypted information; and decrypting the information using a one of the symmetric encryption keys associated with the user device.

While aspects of the invention have been described with reference to at least one exemplary embodiment, it is to be clearly understood by those skilled in the art that the invention is not limited thereto. Rather, the scope of the invention is to be interpreted only in conjunction with the appended claims and it is made clear, here, that the inventor(s) believe that the claimed subject matter is the invention.

## Claims

1. A method for transmitting information between an at least one user device, under the control of a user, and an at least one vendor device, under the control of a vendor, using inaudible acoustic signals, the method comprising the steps of:
implementing a user application residing in memory on the at least one user device, said user application configured for generating and processing the inaudible acoustic signals;
implementing a vendor application residing in memory on the at least one vendor device, said vendor application configured for generating and processing the inaudible acoustic signals; and
upon a one of the user device and vendor device needing to transmit information to the other of the user device and vendor device:
converting the information, via the one of the user device and vendor device, to an inaudible acoustic signal;
positioning the user device and vendor device proximal to one another;
producing the inaudible acoustic signal via a speaker of the one of the user device and vendor device;
receiving the inaudible acoustic signal via a microphone of the other of the user device and vendor device; and
converting the inaudible acoustic signal, via the other one of the user device and vendor device, back to the information.

2. The method of claim 1, further comprising the steps of:
implementing a central computing system in selective communication with each of the at least one user device and at least one vendor device and configured for receiving and processing data related to the at least one user device, the at least one vendor device, and the inaudible acoustic signals; and
implementing a database server in communication with the computing system and configured for selectively storing said data related to the at least one user, user device, vendor, vendor device, and inaudible acoustic signal.

3. The method of claim 2, further comprising the steps of:
implementing an asymmetric encryption key to be securely stored in the computing system, the public certificate for which being stored in memory on each of the user device and vendor device; and
generating a unique set of symmetric encryption keys for each of the at least one user device and vendor device, said symmetric encryption keys to be securely stored in memory on the associated at least one user device and vendor device.

4. The method of claim 3, wherein the step of generating a unique set of symmetric encryption keys for each of the at least one user device and vendor device further comprises the step of generating at least one of:
a transport key to be used to encrypt and decrypt information that is transmitted between the computing system and each of the user application and vendor application;
a signature key to be used to create an integrity cryptogram in order to avoid any data manipulation in between any communications and for end point authentication;
a storage key to be used to encrypt and decrypt any sensitive data that might be stored in memory on the user device; and
a master key to be used to encrypt each of the transport key, signature key and storage key.

5. The method of claim 4, further comprising the steps of, upon enrolling a new user device with the computing system:
encrypting and transmitting to the computing system user-specific data related to the user device and user application, said data including at least one of a name of the user, an email address of the user, a one-way hash of a password of the user, a make and model of the user device, and the associated signature key;
receiving and decrypting the user-specific data via the computing system;
performing risk analysis on the user-specific data;
sending a confirmation link to the user device; and
assigning a unique user ID to the user device.

6. The method of claim 5, further comprising the step of allowing the user application to add and manage an at least one payment method for conducting payment transactions through the computing system.

7. The method of claim 4, further comprising the steps of, upon enrolling a new vendor device with the computing system:
encrypting and transmitting to the computing system vendor-specific data related to the vendor device and vendor application, said data including at least one of a name of the vendor, an email address of the vendor, a one-way hash of a password of the vendor, a make and model of the vendor device, and the associated signature key;
receiving and decrypting the vendor-specific data via the computing system;
performing risk analysis on the vendor-specific data;
sending a confirmation link to the vendor device; and
assigning a unique vendor ID to the vendor device.

8. The method of claim 7, further comprising the step of allowing the vendor application to add and manage the inaudible acoustic signals to be transmitted via the vendor device.

9. The method of claim 1, wherein the step of producing the inaudible acoustic signal via a speaker of the one of the user device and vendor device further comprises the step of producing the inaudible acoustic signal concurrently with audible media content.

10. The method of claim 1, further comprising the step of, upon the user electing to purchase a desired product or service:
inputting into the vendor application of the vendor device a proposed transaction amount to be charged for the desired product or service;
generating an authorization request containing a unique vendor ID associated with the vendor device along with information related to the proposed transaction, including the proposed transaction amount;
encrypting the authorization request using a unique signature key associated with the vendor device;
transmitting the encrypted authorization request to the user device;
accepting the proposed transaction via the user device;
encrypting the authorization request using a unique signature key associated with the user device;
transmitting the encrypted authorization request back to the vendor device;
validating the encrypted authorization request to ensure it originated from the user device;
querying the user application to obtain the desired payment method to be used for the proposed transaction;
submitting a payment authorization request to an appropriate payment network associated with the desired payment method; and
upon the payment network approving the payment authorization request, completing the transaction.

11. The method of claim 1, further comprising the step of transmitting information related to a given product or service to the at least one user device, the step comprising the further steps of:
upon the user device receiving the inaudible acoustic signal containing the information related to the product or service, authenticating the inaudible acoustic signal to verify that it originated from the vendor device;
upon authenticating the inaudible acoustic signal, displaying the information on the user device; and
providing the options, via the user device, of requesting additional information on the product or service, or submitting a purchase request for the product or service.

12. The method of claim 11, further comprising the steps of, upon the user requesting additional information on the product or service:
transmitting an encrypted information request to the vendor device; and
transmitting said additional information to the user device.

13. The method of claim 11, further comprising the steps of, upon the user desiring to submit a purchase request for the product or service:
transmitting an encrypted purchase request to the vendor device, said purchase request containing at least one of a date and time of the proposed transaction, product or service to be purchased, a proposed transaction amount, a name of the user, an email address of the user, a phone number of the user, a mailing address of the user, and a unique transaction token;
upon determining that the product or service is unavailable, rejecting the purchase request and transmitting an appropriate notice to the user device; and
upon determining that the product or service is available,
querying the user application to obtain the desired payment method to be used for the proposed transaction;
submitting a payment authorization request to an appropriate payment network associated with the desired payment method; and
upon the payment network approving the payment authorization request, completing the transaction.

14. The method of claim 1, further comprising the step of, upon the user electing to be authenticated or otherwise have their identity verified:
transmitting an authentication request to the vendor device, said authentication request containing a unique user ID associated with the user device;
transmitting to the user device at least one of a unique vendor ID associated with the vendor device, a randomly generated challenge value to be signed by the user application, and a signature value generated by a unique signature key associated with the vendor device;
upon validating the signature value, transmitting to the vendor device at least one of the user ID and the challenge value as encrypted by a unique signature key associated with the user device; and
upon validating the encrypted challenge value, approving the authentication request.

15. The method of claim 14, further comprising the step of transmitting a perpetual authentication invitation containing at least one of the vendor ID, the randomly generated challenge value to be signed by the user application, and the signature value generated by the signature key associated with the vendor device, said authentication invitation to be received by any user device located proximal to the vendor device.
